# DEMANDE DE BREVET EUROPEEN

(11) **EP 0 643 464 A1**
(43) Date de publication de la demande: **15.03.1995**
(21) Numéro de dépôt: 94401869.6
(22) Date de dépôt: 18.08.1994
(51) Int. Cl.: H02G 15/18, H02G 1/14

(54) **Accessoire réchauffable de câbles d'énergie**

(30) Priorité: 14.09.1993 FR 9310908
(71) Demandeur: CABLES PIRELLI, F-94410 Saint Maurice (FR)
(72) Inventeur: Lequeux, Jean-Michel, F-78290 Croissy sur Seine (FR); Tardif, Laurent, F-75014 Paris (FR)
(74) Mandataire: Lhuillier, René

(57) **Abrégé**

L'invention concerne un accessoire réchauffable de câbles d'énergie notamment une jonction de conducteurs électriques, comprenant un support rigide cylindrique destiné à s'emmancher sur les conducteurs, ainsi qu'une gaine en matériau élastomère à base d'EPR, expansée autour dudit support et constituée d'un corps tricouche intercalaire et d'une enveloppe extérieure, un matelas contenant une substance susceptible de subir une réaction exothermique étant disposé autour d'au moins une partie de la gaine.

Cet accessoire est caractérisé en ce qu'est disposée sur la face extérieure du matelas (14) une coquille (19) rigide d'isolation thermique et de protection mécanique, qui coiffe les extrémités du support interne rigide (5), le matelas (14) étant interposé entre la gaine et la coquille (19).

## Description

La présente invention se situe dans le domaine technique des accessoires de câbles d'énergie et concerne plus précisément une jonction réchauffable.

De manière connue, parmi les techniques employées, certaines de ces jonctions sont constituées d'un support rigide interne entouré d'un manchon formé d'un matériau présentant des propriétés mécanico- rétractables. La mise en place de la jonction consiste essentiellement à la disposer tout d'abord sur la zone de raccordement des âmes des conducteurs, puis à en ôter le support rigide interne de sorte que le manchon puisse se rétreindre.

Les matériaux les mieux appropriés constitutifs du manchon sont des élastomères de type EPR ou de type silicone.

La silicone possède d'excellentes propriétés mécaniques, mais elle est d'un coût excessivement élevé. L'élastomère à base d'EPR, en revanche, apparaît meilleur marché mais n'est pas utilisable lorsque la température extérieure est inférieure à environ 5°C. En effet, dans cette gamme de températures, ce matériau ne présente plus les propriétés rétractables requises, ce qui met en cause l'intégrité mécanique de la jonction.

Pour pallier ces inconvénients, la Demanderesse a mis au point une jonction en élastomère à base d'EPR -donc de faible coût- qui est utilisable dans une vaste gamme de températures et notamment par basses températures, et qui présente une grande facilité de manutention et de mise en oeuvre.

A cet effet, un objet principal de la présente invention consiste en un accessoire réchauffable de câbles d'énergie notamment une jonction de conducteurs électriques, comprenant un support rigide cylindrique destiné à s'emmancher sur les conducteurs, ainsi qu'une gaine en matériau élastomère à base d'EPR, expansée autour dudit support et constituée d'un corps tricouche intercalaire et d'une enveloppe extérieure, un matelas contenant une substance susceptible de subir une réaction exothermique étant disposé autour d'au moins une partie de la gaine, caractérisé en ce qu'est disposée sur la face extérieure du matelas une coquille rigide d'isolation thermique et de protection mécanique, qui coiffe les extrémités du support interne rigide, le matelas étant interposé entre la gaine et la coquille.

L'utilisation conjointe du matelas et de la coquille permet ainsi de porter l'accessoire à une température garantissant l'intégrité des propriétés mécaniques de l'élastomère à base d'EPR.

De manière préférée, la coquille fixe le matelas par coincement autour de la gaine.

Outre la fixation éventuelle du matelas, la coquille extérieure assume une triple fonction.

Elle permet tout d'abord une manutention aisée de l'ensemble de l'accessoire. Elle constitue en outre une barrière isolante limitant les déperditions de chaleur, et contribue de ce fait à garder le plus longtemps possible l'accessoire à température optimale. Enfin, elle assure une protection mécanique contre les chocs susceptibles d'endommager le matelas ou l'accessoire, ou encore de provoquer un déclenchement intempestif de la réaction exothermique.

Le matelas est fabriqué généralement à partir d'un film de polymère, tel que le poly-chlorure de vinyle souple soudé. Il renferme une substance susceptible de subir une réaction exothermique.

Une telle substance est avantageusement constituée par un liquide en surfusion pouvant être soumis à une réaction exothermique de cristallisation, initiée par un déclencheur métallique.

Le liquide en question est généralement un sel en surfusion, comme par exemple un mélange d'acétate de sodium tri-hydrate et d'eau.

On peut également envisager l'emploi d'une substance à base de poudre de fer, dont l'oxydation s'accompagne d'un fort dégagement de chaleur.

Divers autres avantages et caractéristiques ressortent de la description faite ci-après en référence aux dessins annexés qui montrent, à titre d'exemple non limitatif, un mode particulier de réalisation de l'objet de l'invention.

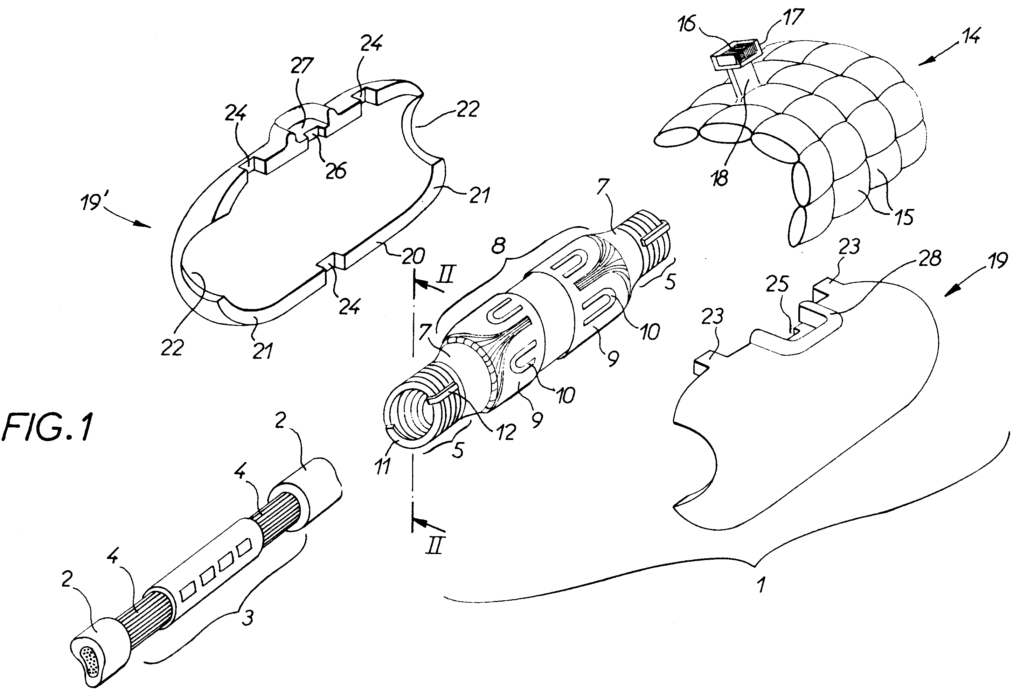

La figure 1 représente une vue en perspective éclatée d'une jonction conforme à l'invention.

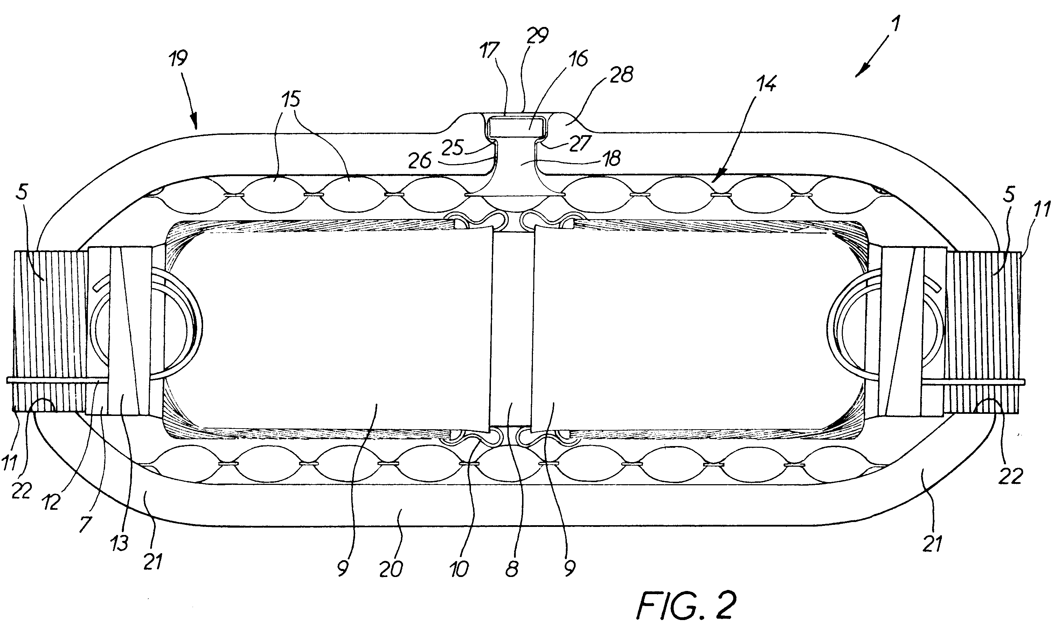

La figure 2 représente une vue de face en coupe partielle selon la ligne II-II, de la figure 1.

On voit sur les figures une jonction 1 de conducteurs électriques 2, destinée à recouvrir la zone 3 de raccordement des âmes 4 des conducteurs 2.

Cette jonction 1 comprend un support interne 5 rigide de forme sensiblement cylindrique, et présentant une section suffisante afin de pouvoir s'emmancher sur les conducteurs 2.

Une gaine en matériau élastomère à base d'EPR, est expansée autour du support 5. Elle est constituée d'un corps tricouche 7 intercalaire, ainsi que d'une enveloppe extérieure 8 repliée à ses extrémités afin de former deux rabats 9 pourvus de languettes 10.

Le support interne 5 est constitué de deux longueurs de support sensiblement égales, mises bout à bout et constituées chacune de bandelettes 11 en polypropylène enroulées en spirale et terminées à leur extrémité intérieure, par une tirette 12 ramenée vers les extrémités du support et fixée au moyen d'un adhésif 13.

Grâce à une telle conformation, chaque partie de support 5 peut être ôtée séparément, en déroulant la bandelette 11 par action sur la tirette 12.

Un matelas 14 est enroulé autour de la gaine. Il est constitué de deux feuilles de polychlorure de vinyle souple, soudées entre elles de manière à former un sac sensiblement rectangulaire. Le matelas contient un mélange d'acétate de sodium tri-hydrate et d'eau susceptible de subir une réaction de cristallisation exothermique sous l'action d'un déclencheur métallique. Il se trouve divisé en alvéoles 15 élémentaires grâce à des soudures locales de ses parois extérieure et intérieure. Une telle conformation permet d'éviter l'accumulation du mélange liquide vers le bas, sous l'effet de la gravité. Pour favoriser une bonne propagation de la réaction de cristallisation, il convient toutefois de préserver un contact même minime, entre deux alvéoles voisins.

Le déclencheur métallique 16 est avantageusement composé de multiples surfaces métalliques frottant les unes contre les autres. Toutefois, il peut également être formé par une pastille métallique présentant une ou plusieurs fissures. Le déclencheur 16 est placé en contact intime avec le mélange liquide, dans un compartiment 17 présentant des dimensions très légèrement supérieures aux siennes.

Le compartiment 17 est relié au corps du matelas 4 par l'intermédiaire d'un cordon 18 déroulable soudé au niveau du point de jonction de deux alvéoles. Une fois encore, il est nécessaire d'assurer une continuité du contact liquide entre le compartiment, le cordon et les alvéoles, afin de garantir une bonne propagation de la réaction.

Le matelas 14 est recouvert sur sa périphérie, par une coquille 19 isolante en polystyrène expansé, composée de deux demi-coquilles 19' complémentaires qui se juxtaposent longitudinalement.

L'ensemble de la coquille 19 présente une partie médiane 20 sensiblement cylindrique, dont la section correspond à celle du matelas 14 enroulé sur la gaine. La partie médiane est encadrée par deux zones d'extrémité 21 symétriques et sensiblement tronconiques, ouvertes selon une portion de cylindre 22 s'emboîtant sur les support internes 5. De cette manière, la coquille assure une fonction de fixation du matelas sur la gaine. Les deux demi-coquilles sont assujetties l'une à l'autre par la coopération de tenons 23 et de mortaises 24 dont elles sont respectivement pourvues. Il est également possible d'assurer ou de renforcer la fixation, au moyen de ruban adhésif. L'épaisseur de la coquille est sensiblement constante, et doit être suffisante pour permettre d'assurer une bonne isolation et de maintenir le matériau élastomère à une température d'au moins 15°C durant le temps requis par le déroulement des opérations inhérentes à la pose de la jonction.

La coquille présente en son milieu un évidement 25 de réception du compartiment 17 accueillant le déclencheur 16. Cet évidement 25 est creusé d'un canal 26 vertical dans lequel est enroulé le cordon de jonction 18. Un rebord 27 servant de siège au déclencheur entoure le canal 26, ses dimensions étant légèrement supérieures à celles du déclencheur. Pour permettre l'enlèvement aisé de la coquille, l'évidement 25 est ménagé au niveau de la frontière entre les demi-coquilles 19, se trouvant de ce fait constitué de deux demi-évidements complémentaires. Afin d'assurer une protection maximale à l'égard du déclencheur, la coquille présente un bourrelet 28 périphérique à l'évidement, et débordant au-dessus du compartiment 17 de réception du déclencheur 16. Un opercule 29 rigide est en outre disposé sur le bourrelet 28 de manière à recouvrir entièrement le déclencheur et à prévenir ainsi tout déclenchement intempestif de la réaction de cristallisation.

La jonction réchauffable ainsi formée, constitue un accessoire homogène aisément transportable et manipulable. Elle présente un intérêt considérable dès lors que la température du site où doit avoir lieu l'opération, est suffisamment basse pour altérer de manière sensible les propriétés du matériau élastomère à base d'EPR.

Dans ces conditions, la mise en oeuvre de la jonction réchauffable, est alors la suivante.

Lors de l'arrivée sur le site, il s'agit tout d'abord d'enfiler la jonction sur les deux câbles à relier, puis à ôter l'opercule 29 situé sur le bourrelet 28 de protection, ce qui permet l'accès au déclencheur 16. On appuie ensuite sur ce dernier, de manière à provoquer un contact métal-métal initiateur de la réaction de cristallation du mélange liquide. Puis on procède de manière connue à la pose des prises d'écran puis au dénudage des conducteurs, et enfin au raccordement des âmes 4 de ces derniers au moyens d'un manchon à sertir.

Ensuite, on enlève la coquille 19 ainsi que le matelas 14, et on fait glisser la jonction au-dessus de raccordement des âmes. Par traction sur les tirettes 12, on ôte les supports internes 5 ce qui a pour effet de rétreindre la gaine expansée autour de cette zone.

Pour réaliser de manière optimale cette dernière opération, il est nécessaire que le matériau élastomère à base d'EPR se trouve à température adéquate. C'est la raison pour laquelle on se doit de dimensionner le matelas et la coquille de sorte que la gaine se trouve à une telle température à la fin du laps de temps nécessaire à l'ensemble des opérations préliminaires.

Lorsque la gaine est rétreinte, on rabat la tresse métallique que l'on frette, puis on met en place l'enveloppe 8 de protection en déroulant ses rabats 9 par action sur les languettes 10.

La présente invention n'est pas limitée à l'exemple décrit et réalisé. En effet, l'homme du métier est à même d'adapter l'invention à tout type d'accessoire de conducteurs constitué, au moins en partie, d'un matériau élastomère à base d'EPR dont les propriétés mécaniques sont susceptibles de s'altérer à basse température. On citera de manière non limitative les extrémités de conducteurs et les raccords de dérivation.

## Revendications

1. Accessoire réchauffable de câbles d'énergie notamment une jonction de conducteurs électriques, comprenant un support rigide cylindrique destiné à s'emmancher sur les conducteurs, ainsi qu'une gaine en matériau élastomère à base d'EPR, expansée autour dudit support et constituée d'un corps tricouche intercalaire et d'une enveloppe extérieure, un matelas contenant une substance susceptible de subir une réaction exothermique étant disposé autour d'au moins une partie de la gaine, caractérisé en ce qu'est disposée sur la face extérieure du matelas (14) une coquille (19) rigide d'isolation thermique et de protection mécanique, qui coiffe les extrémités du support interne rigide (5), le matelas (14) étant interposé entre la gaine et la coquille (19).

2. Accessoire réchauffable selon la revendication 1, caractérisé en ce que la coquille (19) fixe le matelas (14) par coincement autour de la gaine.

3. Accessoire réchauffable selon la revendication 2, caractérisé en ce que la substance du matelas (14) est un liquide en surfusion dont la cristallisation exothermique est initiée par un déclencheur métallique (16) accessible à l'extérieur de la coquille (19).

4. Accessoire réchauffable selon la revendication 3, caractérisé en ce que le déclencheur (16) est placé dans un compartiment (17) relié au corps du matelas (14) par l'intermédiaire d'un cordon (18).

5. Accessoire réchauffable selon la revendication 4, caractérisé en ce que la coquille présente un évidement (25) dans lequel est logé le compartiment (17) de réception du déclencheur (16).

6. Accessoire réchauffable selon la revendication 5, caractérisé en ce que la coquille présente un bourrelet (28) de protection du déclencheur (16), périphérique à l'évidement (25) et obturé au moyen d'un opercule rigide (29).

7. Accessoire réchauffable selon l'une des revendications précédentes, caractérisé en ce que le matelas (14) est divisé en alvéoles (15) élémentaires, grâce à des soudures locales de ses parois extérieure et intérieure.

8. Accessoire réchauffable selon la revendication 7, caractérisé en ce que les alvéoles (15) sont séparés par des lignes de soudure réunissant les parois intérieure et extérieure du matelas.

9. Accessoire réchauffable selon l'une des revendications précédentes, caractérisé en ce que la coquille (19) est constituée de deux demi-coquilles complémentaires qui se juxtaposent longitudinalement au moyen d'une liaison tenon-mortaise (23, 24) et/ou une liaison par adhésif.
